# EUROPEAN PATENT SPECIFICATION

(11) **EP 3 321 026 B1**
(45) Date of publication and mention of the grant of the patent: **23.12.2020**
(21) Application number: 17200166.1
(22) Date of filing: 06.11.2017
(51) Int. Cl.: B23P 15/00, B21D 5/00, B21D 35/00, B21D 47/04, B21D 26/059, B21D 49/00, B21D 53/88, B32B 15/01, B62D 25/00, B62D 21/09

(54) **MANUFACTURING METHOD FOR A BENT MEMBER**
HERSTELLUNGSVERFAHREN FÜR EIN GEBOGENES ELEMENT
PROCÉDÉ DE FABRICATION D'UN ÉLÉMENT INCURVÉ

(30) Priority: 10.11.2016 JP 2016219781
(43) Date of publication of application: 16.05.2018
(73) Proprietor: TOYOTA JIDOSHA KABUSHIKI KAISHA, Toyota-shi, Aichi-ken, 471-8571 (JP)
(72) Inventor: EGAWA, Tetsuji, Aichi-ken 471-8571 (JP); TAGUCHI, Toshiyuki, Aichi-ken 471-8571 (JP)
(74) Representative: J A Kemp LLP

(56) References cited:
- EP-A1- 1 980 728
- EP-A1- 2 561 946
- EP-A2- 1 186 358
- DE-B3-102010 016 945
- JP-A- 2002 331 316

## Description

### BACKGROUND OF THE INVENTION

### 1. Field of the Invention

The present invention relates to a manufacturing method for a bent member.

### 2. Description of Related Art

For example, bent members formed by laying and welding reinforcing plates onto respective bent portions of a metallic plate are used in vehicle frames. Only portions requiring a greater strength are reinforced by the reinforcing plates so as to cope with both a high increase in strength and weight reduction. Meanwhile, Japanese Patent Application Publication No. 2002-331316 discloses a technique to press a metallic plate and reinforcing plates together while these plates are laid on each other.

DE 10 2010 016945 B3 discloses a method involving heating and transforming a semi-finished material to an austenitizing temperature, and removing a cutout or section of the semi-finished material. A uniform blank with different thickness or different material properties is inserted into the cutout or section of the semi-finished material. This blank is welded along its contact edge or contact contour with the semi-finished product and subsequently subjected to heating, forming and tempering.

### SUMMARY OF THE INVENTION

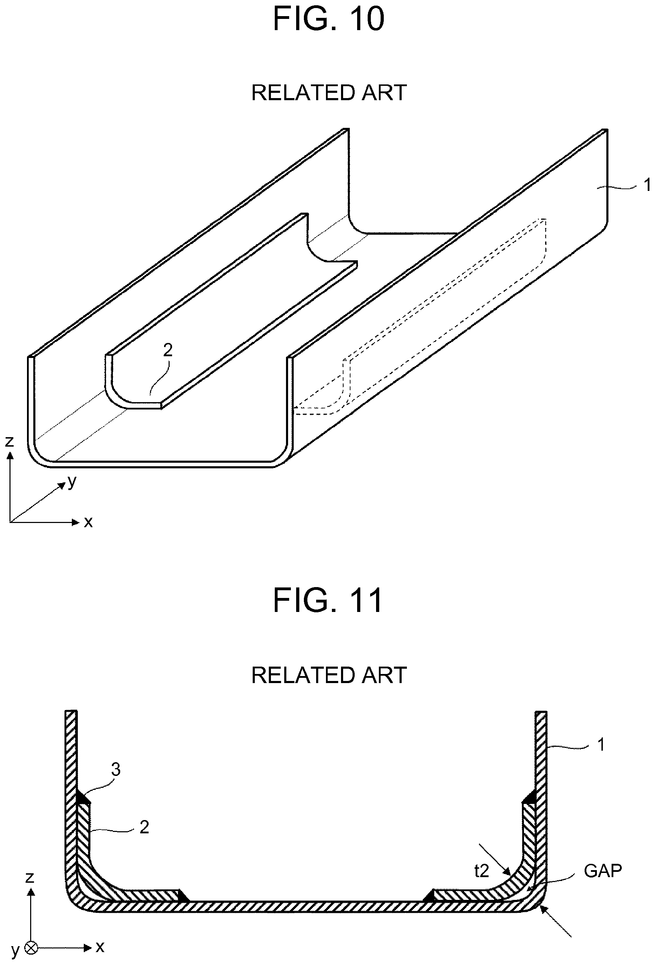

The inventors have found the following issues regarding a bent member formed by laying and welding reinforcing plates onto bent portions of a metallic plate. FIG. 10 is a perspective view of a bent member according to the related art of the present invention. FIG. 11 is a cross-sectional view of the bent member according to the related art of the present invention. Right-handed xyz coordinates shown in the drawings are illustrated for convenience of explanation regarding a positional relation among configuration elements. For example, a plus direction of the z-axis represents a vertically upward direction, and an x-y plane represents a horizontal plane.

As shown in FIG. 10, a pair of bent portions is provided to a metallic plate 1 in a manner as to extend in a longitudinal (a y-axis direction) of the metallic plate 1, and a pair of reinforcing plates 2 that are bent is laid on the metallic plate 1 along the bent portions thereof. Specifically, the reinforcing plates 2 are laid on the metallic plate 1 such that an outer surface of each reinforcing plate 2 is in contact with an inner surface of each bent portion of the metallic plate 1. As shown in FIG. 11, the reinforcing plates 2 are joined, that is, are welded to the metallic plate 1 via welded portions 3. In FIG. 10, although illustrations of the welded portions 3 are omitted, the respective welded portions 3 are so provided as to extend in the y-axis direction respectively along the pair of side surfaces of the reinforcing plates 2.

Here, as shown in FIG. 11, gaps are often generated between the inner surfaces of the metallic plate 1 and the outer surfaces of the reinforcing plate 2. If the gaps are generated, compared with the case in which no gaps are generated and the inner surface of the metallic plate 1 and the outer surfaces of the reinforcing plates 2 are in tight contact with each other, the reinforcing effect by the reinforcing plates 2 is deteriorated; and consequently it becomes difficult to attain desired deformation strength and rigidity. Consequently, it is required to suppose such gaps in advance, and set plate thicknesses of the reinforcing plate to be thicker. However, as a result, there occurs such a problem that increase in weight of the bent members is caused.

The present invention provides a manufacturing method for a bent member capable of attaining weight reduction while maintaining strength of the bent member. The present invention is defined in the claims.

The reinforcing plate is fitted in the opening formed in the first metallic plate, and is welded to the first metallic plate. Hence, it is possible to make the wall thicknesses of the reinforcing portions thinner than those of the related art while maintaining the strength thereof, to thereby attain weight reduction.

Each of the reinforcing plates may be thicker than the first metallic plate, and may have a composition identical to that of the first metallic plate. With such a configuration, it is possible to easily obtain a necessary strength for the reinforced portions, and also to easily weld the reinforcing plates to the first metallic plate.

The opening may be a through-holes whose entire circumference is surrounded by the first metallic plate. With such a configuration, it is possible to reduce strain generated at the welded portions.

The opening may be a cutout provided in the first metallic plate.

A second metallic plate may be welded to a side surface of the reinforcing plate that is not surrounded by the first metallic plate.

According to the present invention there is provided the manufacturing method defined in claim 1.

In the bent member manufactured according to the present invention, the reinforcing plate is fitted in the opening formed in the first metallic plate, and is welded to the first metallic plate. Hence, it is possible to make the wall thicknesses of the reinforcing portions thinner than those of the related art while maintaining the strength thereof, to thereby promote weight reduction.

The reinforcing plate may have a wall thickness thicker than that of the first metallic plate, and may have a composition identical to that of the first metallic plate.

According to the present invention, it is possible to provide a manufacturing method for a bent member capable of attaining weight reduction while maintaining the strength thereof.

### BRIEF DESCRIPTION OF THE DRAWINGS

Features, advantages, and technical and industrial significance of exemplary embodiments of the invention will be described below with reference to the accompanying drawings, in which like numerals denote like elements, and wherein:
FIG. 1 is a perspective view of a bent member;
FIG. 2 is a cross sectional view of the bent member;
FIG. 3 is a perspective view of a bent member according to a comparative example;
FIG. 4 is a flowchart showing a manufacturing method for the bent member;
FIG. 5 is a cross-sectional view showing the manufacturing method for the bent member;
FIG. 6 is a cross-sectional view showing a method of fitting reinforcing plates 20 into openings 12 of metallic plate 10;
FIG. 7 is a macro-photograph in a plan view of an embodiment example in which the metallic plate 10 to which the reinforcing plates 20 are welded is bent;
FIG. 8 is a perspective view of a bent member;
FIG. 9 is a cross-sectional view of the bent member;
FIG. 10 is a perspective view of related art of the present invention; and
FIG. 11 is a cross-sectional view of the related art of the present invention.

### DETAILED DESCRIPTION OF EMBODIMENTS

Hereinafter, specific embodiments to which the present invention is applied will be described in detail with reference to drawings. However, the present invention is not limited to the following embodiments. In addition, for the sake of clarifying the description, the following description and drawings are appropriately simplified.

### <Configuration of bent member>

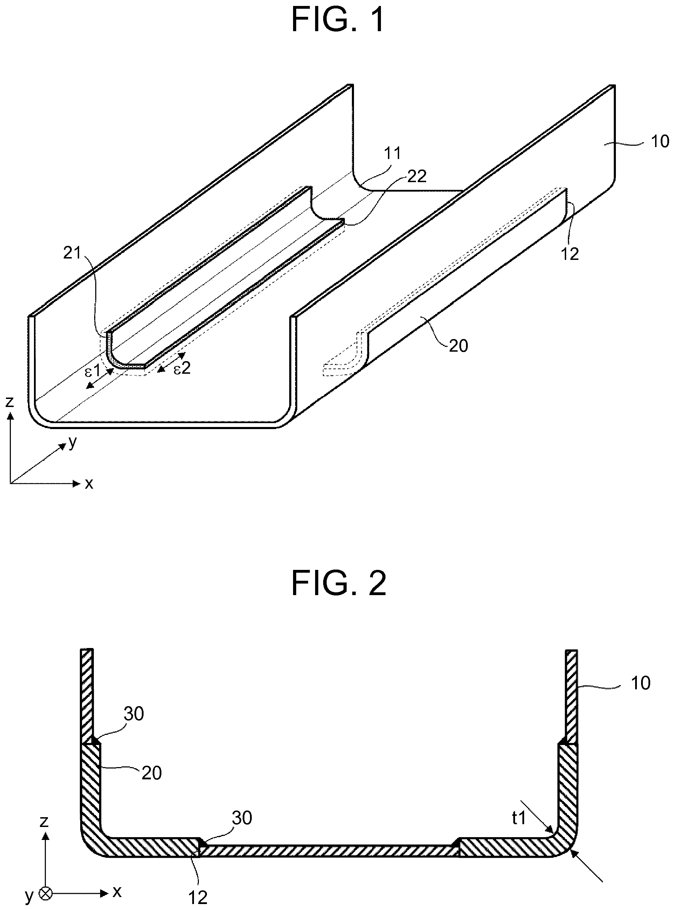

First, with reference to FIG. 1 and FIG. 2, a bent member will be described. FIG. 1 is a perspective view of the bent member. FIG. 2 is a cross-sectional view of the bent member. As shown in FIG. 1, the bent member includes a metallic plate 10 (a first metallic plate) and reinforcing plates 20 provided to bent portions 11 of the metallic plate 10, and this bent member is suitable for a vehicle frame, for example. It should be appreciated that right-handed xyz coordinates shown in FIG. 1 and in other drawings are illustrated for convenience of explanation regarding a positional relation among configurational elements. Usually, a plus direction of a z-axis represents a vertically upward direction, and an x-y plane represents a horizontal plane, and these are the same in each drawing.

As shown in FIG. 1, the metallic plate 10 is a main body of the bent member, and is formed by bending a flat steel plate or a flat aluminum alloy plate. In an example of FIG. 1, the metallic plate 10 has a U-shaped cross section, and is so provided as to extend in the y-axis direction. Specifically, the metallic plate 10 has a bottom portion in parallel to the x-y plane, and a pair of side walls standing up from the bottom portion.

Between the bottom portion and the pair of side walls of the metallic plate 10, there is provided a pair of bent portions 11 extending in the longitudinal direction (the y-axis direction) of the metallic plate 10. The metallic plate 10 is provided with a pair of openings 12 extending along these bent portions 11. In the example of FIG. 1, the openings 12 are through-holes whose entire circumferences are surrounded by the metallic plate 10. The metallic plate 10 may have any shape as far as the metallic plate 10 has the bent portions 11, and may also have an L-shaped cross section, for example.

As shown in FIG. 1 and FIG. 2, the reinforcing plates 20 are fitted into and are welded to the openings 12 formed in the metallic plate 10. The reinforcing plates 20 serve for reinforcing the metallic plate 10, and thus the reinforcing plates 20 are preferably thicker metallic plates than the metallic plate 10. Since the reinforcing plates 20 are welded to the metallic plate 10, the reinforcing plates 20 are preferably formed of the same metallic material as that of the metallic plate 10, that is, formed of a metallic material having a composition identical to that of the metallic plate 10. The reinforcing plates 20 are bent together with the metallic plate 10, and thus each of the reinforcing plates 20 has an L-shaped cross section, and extends along the corresponding bent portion 11 in the y-axis direction. The reinforcing plates 20 are in contact with only inner circumferential surfaces of the metallic plate 10 defining the openings 12. It should be noted that each of the reinforcing plates 20 may have the same thickness as that of the metallic plate 10, and may be formed of a metallic material having a greater strength than that of the metallic plate 10.

Here, the outer surface of each reinforcing plate 20 is flush with the outer surface of the metallic plate 10, but each reinforcing plate 20 is thicker than the metallic plate 10; therefore, the inner surface of each reinforcing plate 20 protrudes from the inner surface of the metallic plate 10. Each welded portion 30 shown in FIG. 2 is formed in a region (a latched part in FIG. 1) protruding from the inner surface of the metallic plate 10 at end surfaces 21 and side surfaces 22 of each reinforcing plate 20. That is, each welded portion 30 is formed around the entire circumference of each reinforcing plate 20. In FIG. 1, illustrations of the welded portions 30 are omitted for easy understanding.

The bent member shown in FIG. 10 and FIG. 11 is formed by laying and welding the reinforcing plates 2 onto the metallic plate 1. To the contrary, in the bent member here described, the reinforcing plates 20 are fitted in the openings 12 formed in the metallic plate 10, and are welded to the metallic plate 10. Hence, a wall thickness t1 of each reinforced portion shown in FIG. 2 can be thinner than a wall thickness t2 of each reinforced portion shown in FIG. 11, to thus promote weight reduction. That is, the bent member can promote weight reduction of the bent member while maintaining the strength thereof. In an example in which the metallic plate 10 and the reinforcing plates 20 are made of steel plates, the wall thickness could be 40% reduced, from t2=6.5 mm down to t1=3.8 mm.

Antirust coating is difficult to enter gaps between the metallic plate 1 and the reinforcing plates 2 shown in FIG. 11. Hence, particularly in the case in which the metallic plate 1 and the reinforcing plates 2 are made of steel plates, there is a problem that rust is likely to grow from the gaps. To the contrary, in the bent member here described, gaps which hinder entrance of such antirust coating cannot be generated, and thus it is possible to effectively suppress growth of rust by the antirust coating.

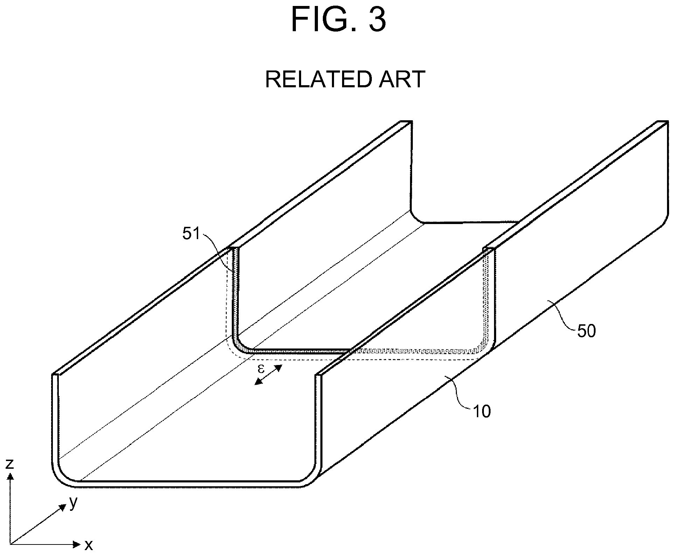

In addition, in the bent member here described, the reinforcing plates 20 are fitted in the openings 12 formed in the metallic plate 10, and the welded portions 30 are formed around entire circumferences of the reinforcing plates 20. Hence, it is possible to reduce strain generated to the welded portions 30 due to bending relative to the longitudinal direction (the y-axis direction) or torsion around the longitudinal direction. Hereinafter, with reference to FIG. 1 and FIG. 3, specific description will be provided. FIG. 3 is a perspective view of the bent member according to the comparative example.

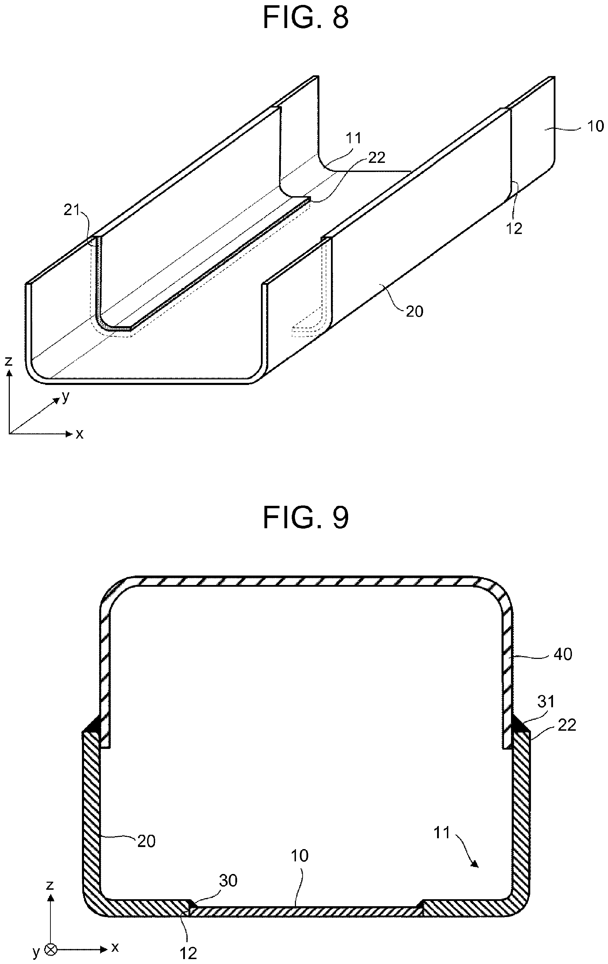

As shown in FIG. 3, in the bent member according to the comparative example, an end surface of a metallic plate 50 made of the same material and having the same thickness as those of the reinforcing plate 20 abuts to an end surface of the metallic plate 10, and the both end surfaces are then laser-welded to each other. The metallic plate 50 has a U-shaped cross section, as with the metallic plate 10, and is so provided as to extend in the y-axis direction. An outer surface of the metallic plate 50 is flush with the outer surface of the metallic plate 10, but the wall thickness of the metallic plate 50 is thicker than that of the metallic plate 10, and thus an inner surface of the metallic plate 50 protrudes from the inner surface of the metallic plate 10. A welded portion is formed in a region (a hatched part in FIG. 9) protruding from the inner surface of the metallic plate 10 at an end surface 51 of the metallic plate 50. That is, the welded portion is formed in a U-shape only at the end surface 51 of the metallic plate 50.

Here, in the bent member according to the comparative example shown in FIG. 3, relative to the bending in the longitudinal direction (the y-axis direction), strain in the y-axis direction generated at the welded portion in a U-shape formed along the end surface 51 of the metallic plate 50 is defined as ε. In the bent member shown in FIG. 1, stain in the y-axis direction generated at each welded portion 30 in the L-shape formed along the end surface 21 of each reinforcing plate 20 is defined as ε1.

As a result of actual measurement using a strain gauge, the strain ε1 in the bent member was 70% of the strain ε in the bent member according to the comparative example. In the bent member shown in FIG. 1, strain ε2 in the y-axis direction generated at the welded portion 30 formed in a straight line extending along the side surface 22 of each reinforcing plate 20 was 30% of the strain ε in the bent member according to the comparative example.

In this manner, in the bent member, the reinforcing plates 20 are fitted in the openings 12 formed in the metallic plate 10, and each welded portion 30 is formed around the entire circumference of each reinforcing plate 20, to thereby reduce the strain generated at each welded portion 30.

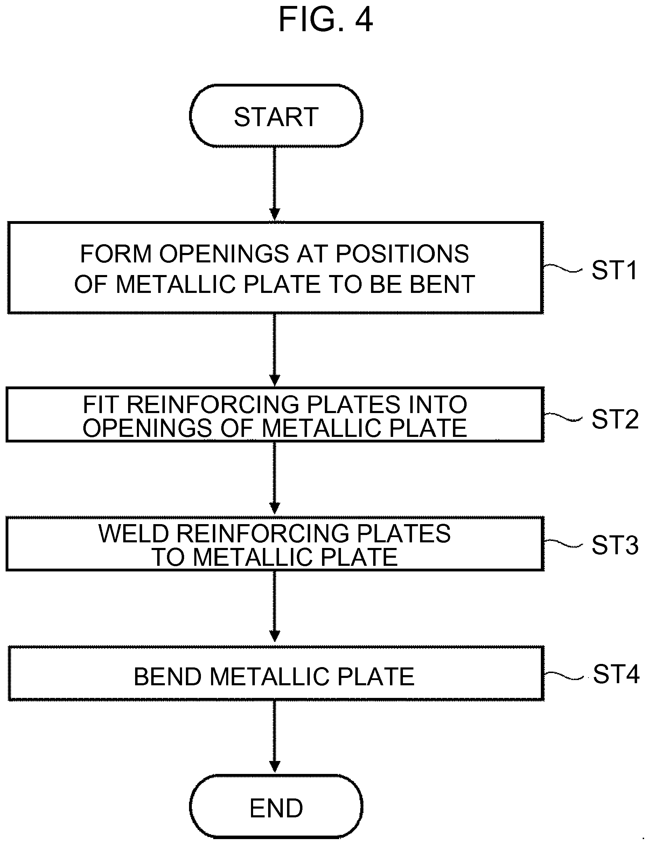

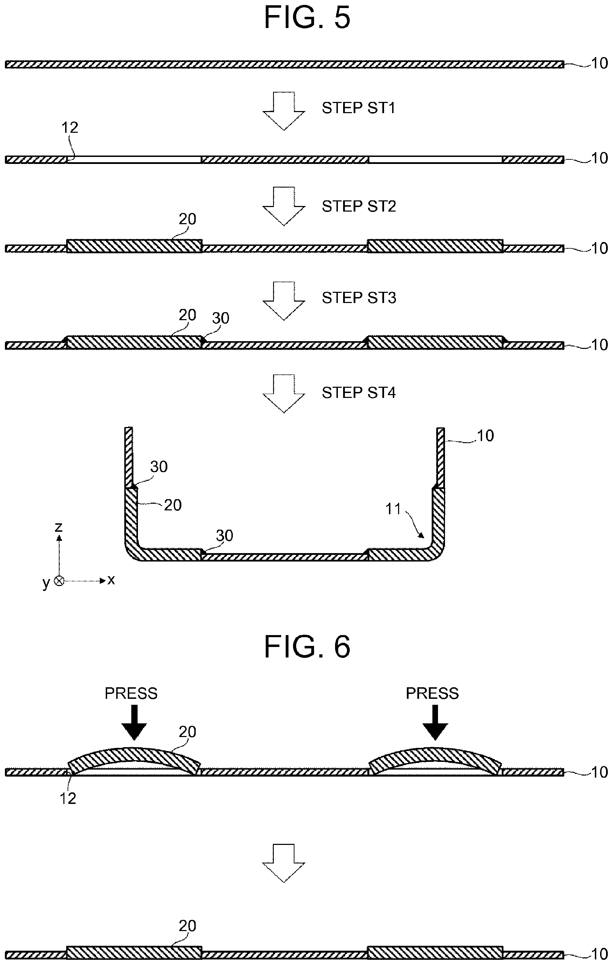

<Manufacturing method for bent member> Next, with reference to FIG. 4 and FIG. 5, a manufacturing method for the bent member will be described. FIG. 4 is a flowchart showing the manufacturing method for the bent member. FIG. 5 is a cross sectional view showing the manufacturing method for the bent member.

First, as shown in FIG. 4 and FIG. 5, the openings 12 are formed in the metallic plate 10 at positions where the metallic plate 10 is to be bent (step ST1). Next, as shown in FIG. 4 and FIG. 5, the reinforcing plates 20 are fitted into the respective openings 12 of the metallic plate 10 (step ST2). At this time, as shown in FIG. 5, bottom surfaces (outer surfaces) of the reinforcing plates 20 are flush with a bottom surface (an outer surface) of the metallic plate 10, and top surfaces (inner surfaces) of the reinforcing plates 20 are brought to protrude from a top surface (an inner surface) of the metallic plate 10.

Here, FIG. 6 is a cross sectional view showing a method of fitting the reinforcing plates 20 into the openings 12 of the metallic plate 10. The reinforcing plates 20 in a flat shape may be pressed and fitted directly into the openings 12 of the metallic plate 10, but it takes time in this method. Hence, as shown in FIG. 6, it is configured that the reinforcing plates 20 are previously deformed in such a manner that gaps are generated between the reinforcing plates 20 and the openings 12 in a state in which the reinforcing plates 20 are inserted into the respective openings 12, and subsequently, each reinforcing plate 20 is pressed to return into a flat shape so as to come into tight contact with the corresponding opening 12. As the method of deforming the reinforcing plates 20 in a manner as to generate gaps between the reinforcing plates 20 and the openings 12, bending, drawing, or the like may be used, but this method is not limited to specific one. Although not illustrated, after the reinforcing plates 20 so cooled as to generate gaps between the reinforcing plates 20 and the openings 12 are inserted into the openings 12, the reinforcing plates 20 may be brought to come into tight contact with the openings 12 due to increase in temperature of the reinforcing plates 20.

Next, as shown in FIG. 4, the reinforcing plates 20 are welded to the metallic plate 10 (step ST3). Specifically, as shown in FIG. 5, the welded portion 30 is formed to the end surfaces 21 and the side surfaces 22 (the hatched part in FIG. 1) of each reinforcing plate 20 protruding from the top surface (the inner surface) of the metallic plate 10. That is, the welded portion 30 is formed around the entire circumference of each reinforcing plate 20.

The welding method is not limited to specific one, but it is preferable to use laser-welding in light of suppression of thermal strain. As shown in FIG. 11, when the reinforcing plates 2 are laid on and welded to the metallic plate 1, arc-welding has been commonly used, for example, but there occurs a problem that deformation due to thermal strain is caused. By using laser-welding, such a problem can be solved.

Finally, as shown in FIG. 4, the metallic plate 10 is bent by using a press machine or the like (step ST4). Through this, as shown in FIG. 5, the reinforcing plates 20 are bent together with the metallic plate 10, so that the reinforcing plates 20 are formed at the bent portions 11 of the metallic plate 10. With the above method, it is possible to manufacture the bent member.

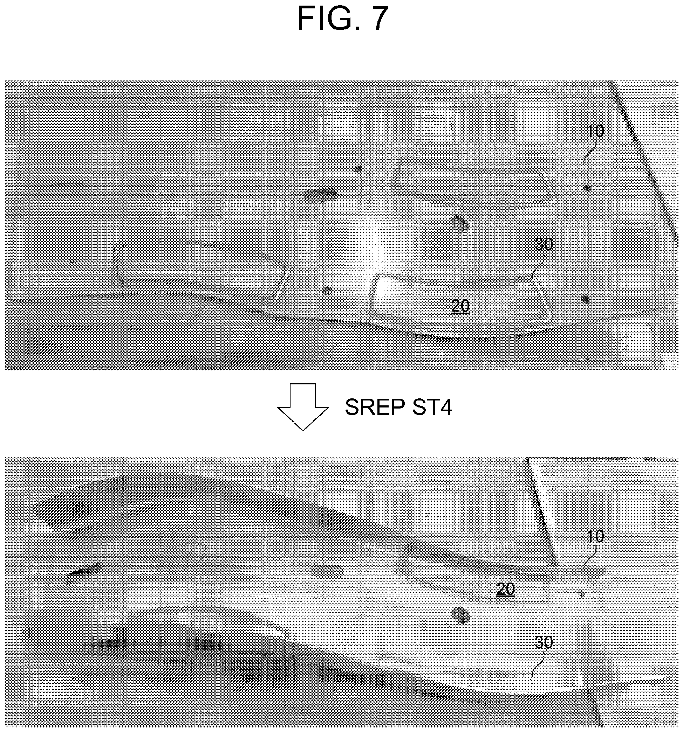

Here, FIG. 7 is a macro-photograph in a plan view of the example in which the metallic plate 10 to which the reinforcing plates 20 are welded is bent. Specifically, each reinforcing plate 20 that was a steel plate having a thickness of 3.8 mm was fitted into each corresponding opening formed in the metallic plate 10 that was a steel plate having a thickness of 2.9 mm, and the reinforcing plates 20 were respectively laser-welded to the metallic plate 10. As shown in FIG. 7, the welded portion 30 was formed around the entire circumference of each reinforcing plate 20. As shown in FIG. 7, the metallic plate 10 in a rectangular shape may be curved. In addition, each reinforcing plate 20 in a rectangular shape may be curved along the metallic plate 10.

Next, with reference to FIG. 8 and FIG. 9, the bent member will be described. FIG. 8 is a perspective view of the bent member. FIG. 9 is a cross-sectional view of the bent member. As shown in FIG. 1, the openings 12 formed in the metallic plate 10 are through holes whose entire circumferences are surrounded by the metallic plate 10. To the contrary, as shown in FIG. 8, the openings 12 formed in the metallic plate 10 are cutouts.

Specifically, each opening 12 reaches the top surface of each corresponding side wall of the metallic plate 10 (side surface of the metallic plate 10). Hence, each of the side surfaces 22 in pair of each reinforcing plate 20 has one side that is not surrounded by the metallic plate 10 and not welded to the metallic plate 10. In this manner, the openings 12 are not limited to the through-holes, and may also be cutouts. If the shape of each cutout is a polygon having N (N≥3) angles, it is preferable that (N-1) sides thereof are surrounded by the metallic plate 10. In an example of FIG. 8, it is N=4, and three sides of each opening are surrounded by the metallic plate 10. In addition, it is preferable to satisfy N≥4.

In FIG. 9, a metallic plate 40 (a second metallic plate) welded to the bent member is also illustrated. The metallic plate 40 has a U-shaped cross section, as with the metallic plate 10, and is so provided as to extend in the y-axis direction. The metallic plate 40 is welded to the bent member via welded portions 31, and this member is configured into a pipe in a rectangular shape as a whole. As shown in FIG. 9, the inner surfaces of the reinforcing plates 20 are in tight contact with the outer surface of the metallic plate 40, and the welded portions 31 are formed along the side surfaces 22 of the reinforcing plates 20 which are not surrounded by the metallic plate 10. The welded portions 31 are difficult to be formed by laser-welding, and thus they are formed by arc-welding or the like, for example.

In this manner, the side surfaces 22 of the reinforcing plates 20 that are not surrounded by the metallic plate 10 are welded to another member, to thereby surround the entire circumferences of the reinforcing plates 20 by the welded portions 30 and the welded portions 31. Hence, in both bent members, it is possible to reduce strain generated at the welded portions 30 due to bending relative to the longitudinal direction (the y-axis direction) or torsion around the longitudinal direction. The other configurations are the same as those of the bent member previously described, and detailed description thereof will be omitted.

The present invention is not limited to the above embodiments, and may be appropriately changed without departing from the scope of the claims.

## Claims

1. A manufacturing method for a bent member comprising:
forming an opening (12) at a position of a first metallic plate (10) where the first metallic plate (10) is to be bent;
fitting a metallic reinforcing plate (20) into the opening (12);
welding the reinforcing plate (20) fitted into the opening (12) to the first metallic plate (10); and
bending the reinforcing plate (20) welded to the first metallic plate, **characterised in that** fitting a metallic reinforcing plate into the opening is done by:
- deforming the reinforcing plate (20) in such a manner that a gap is generated between the reinforcing plate (20) and an inner circumferential surface of the first metallic plate (10) defining the opening (12) in a state in which the reinforcing plate (20) is inserted into the opening (12),
- inserting the reinforcing plate (20) into the opening (12), and
- pressing the reinforcing plate (20) to return to a flat shape so as to come into contact with the inner circumferential surface.

2. The manufacturing method for the bent member according to claim 1, wherein
the reinforcing plate (20) is thicker than the first metallic plate (10), and has a composition identical to a composition of the first metallic plate (10).

3. The manufacturing method for the bent member according to any one of claims 1 or 2, wherein
when the reinforcing plate (20) fitted in the opening (12) is welded to the metallic plate (10), laser-welding is used.

## Patentansprüche

1. Herstellungsverfahren für ein gebogenes Element, das Folgendes umfasst:
Bilden einer Öffnung (12) an einer Position einer ersten Metallplatte (10), an der die erste Metallplatte (10) gebogen werden soll;
Einsetzen einer metallischen Verstärkungsplatte (20) in die Öffnung (12);
Schweißen der in die Öffnung (12) eingesetzten Verstärkungsplatte (20) an die erste Metallplatte (10); und
Biegen der mit der ersten Metallplatte verschweißten Verstärkungsplatte (20), **dadurch gekennzeichnet, dass** das Einsetzen einer Metallverstärkungsplatte in die Öffnung durch Folgendes erfolgt:
- Verformen der Verstärkungsplatte (20), so dass ein Spalt zwischen der Verstärkungsplatte (20) und einer inneren Umfangsfläche der ersten Metallplatte (10) erzeugt wird, der die Öffnung (12) in einem Zustand definiert, in dem die Verstärkungsplatte (20) in die Öffnung (12) eingeführt wird,
- Einsetzen der Verstärkungsplatte (20) in die Öffnung (12) und
- Pressen der Verstärkungsplatte (20), so dass sie zu einer flachen Form zurückzukehrt und mit der inneren Umfangsfläche in Kontakt kommt.

2. Herstellungsverfahren für das gebogene Element nach Anspruch 1, wobei
die Verstärkungsplatte (20) dicker ist als die erste Metallplatte (10) und eine Zusammensetzung aufweist, die mit einer Zusammensetzung der ersten Metallplatte (10) identisch ist.

3. Herstellungsverfahren für das gebogene Element nach einem der Ansprüche 1 oder 2, wobei
wenn die in die Öffnung (12) eingesetze Verstärkungsplatte (20) mit der Metallplatte (10) verschweißt wird, Laserschweißen verwendet wird.

## Revendications

1. Procédé de fabrication d'un élément plié comprenant :
la formation d'une ouverture (12) à une position d'une première plaque métallique (10) où la première plaque métallique (10) doit être pliée ;
l'ajustement d'une plaque de renforcement métallique (20) dans l'ouverture (12) ;
le soudage de la plaque de renforcement (20) ajustée dans l'ouverture (12) à la première plaque métallique (10) ; et
le pliage de la plaque de renforcement (20) soudée à la première plaque métallique, **caractérisé en ce que** l'ajustement d'une plaque de renforcement métallique dans l'ouverture se fait en :
- déformant la plaque de renforcement (20) de manière à créer un espace entre la plaque renforcement (20) et une surface circonférentielle interne de la première plaque métallique (10) définissant l'ouverture (12) dans un état dans lequel la plaque de renforcement (20) est insérée dans l'ouverture (12),
- insérant la plaque de renforcement (20) dans l'ouverture (12), et
- pressant la plaque de renforcement (20) pour qu'elle revienne à une forme plate de manière à venir en contact avec la surface circonférentielle interne.

2. Procédé de fabrication de l'élément plié selon la revendication 1, dans lequel la plaque de renforcement (20) est plus épaisse que la première plaque métallique (10), et a une composition identique à une composition de la première plaque métallique (10).

3. Procédé de fabrication de l'élément plié selon l'une quelconque des revendications 1 ou 2, dans lequel
lorsque la plaque de renforcement (20) ajustée dans l'ouverture (12) est soudée à la plaque métallique (10), un soudage au laser est utilisé.
